# EUROPEAN PATENT SPECIFICATION

(11) **EP 3 916 661 B1**
(45) Date of publication and mention of the grant of the patent: **19.07.2023**
(21) Application number: 20177150.8
(22) Date of filing: 28.05.2020
(51) Int. Cl.: G06Q 20/32, G07F 7/08, G06F 1/16, G06K 19/077, H04B 1/3816, A44B 15/00, G06K 19/00

(54) **A PROVISIONING RECEPTACLE AND A PROVISIONING SYSTEM COMPRISING THE RECEPTACLE**
BEREITSTELLUNGSBEHÄLTER UND BEREITSTELLUNGSSYSTEM MIT DIESEM BEHÄLTER
RÉCEPTACLE DE FOURNITURE ET SYSTÈME DE FOURNITURE COMPRENANT LE RÉCEPTACLE

(43) Date of publication of application: 01.12.2021
(60) Divisional application: 23163567.3
(73) Proprietor: Mastercard International Incorporated, Purchase NY 10577 (US)
(72) Inventor: SABY, Bertrand, 28012 Madrid (ES); AGUADO, Carlos, 28250 Torrelodones (ES); ALCAZAR, Samuel, 28341 Valdemoro (ES); FREIRE, Ramon, 28108 Alcobendas (ES)
(74) Representative: Murgitroyd & Company

(56) References cited:
- EP-A1- 3 101 508
- EP-B1- 3 101 508
- WO-A1-2011/037593
- US-A1- 2019 272 453
- US-A1- 2020 126 063

## Description

### FIELD

The present disclosure relates to a provisioning receptacle and a provisioning system comprising the receptacle.

### BACKGROUND

Traditionally, payments have been made with debit and credit cards. Although the increased use of contactless-enable cards is increasing, this still represents an inconvenience to some users. New forms of payment are emerging which make use of interactive devices - for example, fobs or wristbands. These devices comprise a processor chip, data storage and near-filed communication (NFC) capability.

They are configured and arranged to initiate a payment transaction when placed into close proximity with a payment terminal containing a suitably-configured NFC reader. The payment terminal obtains , via the NFC reader, payment account information from the interactive device, and then communicates with an appropriate financial network or other back-end processing system to authorize the transaction .

Before use (or before a subsequent use), these interactive devices must be provisioned (or re-provisioned ) by providing them with, for example, one or more payment credentials, such as one or more payment tokens. Currently, this provisioning is performed by the supplier of the interactive devices. However, this is not convenient for a user or merchant, who may wish to provision devices immediately before use, or modify the data being stored on the interactive devices.

Document US 2020/0126063 A1 discloses a provisioning device wherein the interactive device has to be arranged within the transmission zone of the provisioning device.

It is an object of the invention to provide a more convenient system for provisioning devices.

### GENERAL STATEMENTS

According to a first aspect of the present disclosure, there is provided a provisioning receptacle for provisioning an interactive device, the interactive device comprising provisioning data storage and a provisioning data receiver, the receptacle comprising: a provisioning gripper, configured and arranged to receive and retain the interactive device with a first provisioning gripper surface and a second provisioning gripper surface; a provisioning data transmitter, configured and arranged to transmit provisioning data to the provisioning data receiver when the interactive device is retained; the retained interactive device (200) is configured and arranged to receive the provisioning data with the provisioning data receiver (225) and to store the provisioning data in the provisioning data storage (250); wherein the provisioning data transmitter (625) and the provisioning data receiver (225) are configured and arranged to send and/or receive one or more signals wirelessly according to a communication protocol selected from the group consisting of: NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof; characterized in that: the gripper surfaces comprise a compressible elastomer foam, configured and arranged to significantly restrict displacement of the provisioning data receiver portion of the interactive device relative to the provisioning data transmitter by conforming to an outer surface of the interactive device when the interactive device is receiving provisioning data; and the provisioning gripper (300, 301) is configured to retain the interactive device by bringing the first and second gripper surfaces into contact with the interactive device such that a space between the first and second gripper surfaces is reduced and the elastomer foam displaces.

By providing a suitably configured compressible elastomer, displacement with respect to the provisioning data transmitter is significantly restricted. This reduces the risk that the transfer of provisioning data is interrupted or distorted.

In addition, interactive devices of different sizes and different form factors may be provisioned using this receptacle. There is also a high degree of reproducibility, allowing a user (for example, an event organizer) to provision interactive devices immediately before use. Convenient re-provisioning may also be performed by a user, for example, to reprogram the devices for use at a different event.

According to a further aspect of the present disclosure, a provisioning receptacle is provided, wherein the distance between the provisioning data transmitter and the provisioning data receiver is 4 cm or less, preferably 2cm or less.

By suitable dimensioning, taking into account the type of interactive devices to be provisioned, the distance between the data transmitter and data receiver may be kept within a desired range, increasing the degree of reliable data reception.

According to a still further aspect of the present disclosure, a provisioning receptacle is provided, wherein the maximum displacement of the provisioning data receiver relative to the provisioning data transmitter during receipt of provisioning data is 1mm or less, preferably 0.5 mm or less.

By reducing displacement to such levels during receipt of provisioning data, the risk of distorted data transfer is reduced to a relatively low degree.

Reliability of data transfer may be increased by providing one or more further transmitters, such as a suitable coil. The user and/or the provisioning data controller and/or the data control device may select the most appropriate transmitter for the size and form factor of the interactive device, or operate two or more transmitters in parallel. This may further increase reliability and/or reproducibility.

According to a further aspect of the present disclosure, provisioning receptacle is provided, further comprising: an access opening, configured and arranged to receive the interactive device.

By providing a suitably dimensioned opening, disturbance of the provisioning transmission and reception by external influences may be further reduced.

Optionally, an opening cover may be provided, configured and arranged to at least partially cover the access opening.

The degree of disturbance may be further reduced by reducing the extent of the opening, or even completely covering the opening, during provisioning data transfer.

According to yet another aspect of the present disclosure, a provisioning receptacle is provided further comprising a provisioning data controller, configured and arranged to receive provisioning instructions, and to execute the instructions, and to transmit corresponding provisioning data with the provisioning data transmitter.

For many uses of the invention, provisioning may be performed relatively independently. However, in some uses, it may be advantageous to provide different provisioning data to different interactive devices. For example, in some security-sensitive uses, the provisioning may be dependent on an identification of the particular interactive device, such as a serial number.

According to still another aspect of the present disclosure, a provisioning system is provided comprising: a provisioning receptacle further comprising a data control receiver, configured and arranged to receive provisioning instructions and to relay them to the provisioning data controller; and a data control device comprising a data control transmitter, configured and arranged to transmit provisioning instructions to the data control receiver.

By using a data control device, the degree of independence may be further increased. In addition, the provisioning receptacle may be used in combination with different data control devices - for example, if an interactive device is being provisioned for a particular consumer, a data device belonging to the consumer may be used.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate preferred and exemplary embodiments and which are not necessarily drawn to scale, wherein:
FIG. 1 depicts a schematic perspective view of a provisioning system;
FIG. 2A and 2B schematically depict an example of a provisioning gripper;
FIG. 3A and 3B schematically depict a further example of a provisioning gripper; and
FIG. 4 depicts a schematic view of a provisioning system.

### DETAILED DESCRIPTION

In the following detailed description, numerous non-limiting specific details are given to assist in understanding this disclosure.

It will be obvious to a person skilled in the art that the method may be implemented on any type of standalone system or client-server compatible system containing any type of client, network, server, and database elements. Storage may be performed using any suitably-configurable computer memory.

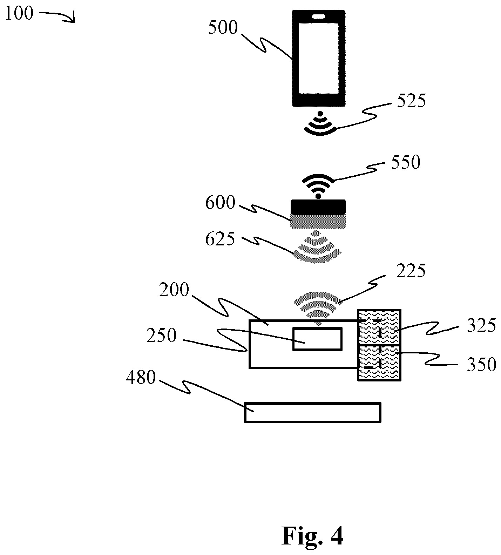

FIG. 4 depicts a schematic view of an example of a provisioning system 100 for provisioning an interactive device 200.

The interactive device 200 comprises provisioning data storage 250 and a provisioning data receiver 225, the interactive device 200 being configured and arranged to receive provisioning data with the provisioning data receiver 225 and to store the provisioning data in the provisioning data storage 250.

The provisioning system 400 comprises:
- a provisioning gripper, configured and arranged to receive and retain the interactive device 200 with a first provisioning gripper surface 325 and a second provisioning gripper surface 350;
- a provisioning data transmitter 625, configured and arranged to transmit provisioning data to the provisioning data receiver 225 when the interactive device 200 is retained.

One or more of the first 325 and second 350 gripper surfaces comprise a compressible elastomer foam, configured and arranged to significantly restrict displacement of the provisioning data receiver 225 portion of the interactive device 200 relative to the provisioning data transmitter 625 by conforming to an outer surface of the interactive device 200 when the interactive device 200 is retained and receiving provisioning data.

The degree of displacement restriction may be determined by measuring the displacement of the provisioning data receiver 225 relative to the provisioning data transmitter 625 during receipt of provisioning data. Preferably the maximum displacement during receipt of provisioning data is 1mm or less, more preferably 0.5mm or less.

The compressible elastomer foam may be, for example, silicone foam rubber, polyurethane foam, EVA foam, or any combination thereof.

It is selected for its suitable mechanical properties such that the degree of displacement restriction is provided. In addition, a relatively low degree of absorption is preferred for the radiation used to transmit 625 and receive 225 provisioning data. For example, suitable communication protocols include NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN. The degree of absorption may be influenced by the frequencies used for transmission 625 / reception 225. The degree of absorption may be further reduced by reducing the radiation path length through the foam material.

In addition, it may be selected to restrict the displacement of interactive devices 200 with different degrees of variation in form factor.

This may depend on the different types of interactive devices 200 to be provisioned. For example, the interactive device 200 may be comprised in object such as a ring, a bracelet, a wristband, a key chain, a fob, a tag, a necklace, a lanyard, a pin, a badge, a brooch, jewelry, a wearable, a watch, a wrist watch, sunglasses, glasses, a textile, an item of clothing, a hat, a card, an identification card, a payment card, a token, a chip, a disc, or any combination thereof.

In addition, for each type of object, there way be also be a further expected variation in form factor - for example, if it is a wearable, the variation in form factor may be related to the expected anatomical variations of the end user, or consumer.

If a highly deformable elastomer foam is used, devices 200 with a high degree of difference in form factor may be received and retained.

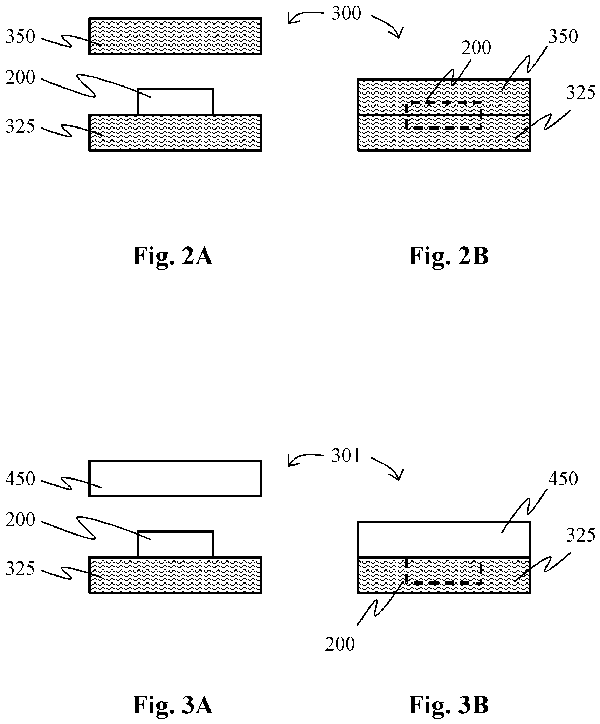

For example, FIG. 2A and 2B schematically depict a first embodiment of a provisioning gripper 300, comprising a first 325 and second 350 gripper surface. This is the provisioning gripper configuration depicted in FIG. 4. Both the first 325 and second 350 gripper surfaces comprise a compressible elastomer foam. As depicted in FIG. 2A, the first 325 and second 350 gripper surfaces are separated by sufficient space to receive an interactive object 200. If the provisioning gripper 300 is comprised in a receptacle, as described below, a suitably dimensioned access opening may be required to receive the interactive object 200.

The interactive object 200 is received by being disposed on one of the gripper surfaces 325, 350. The interactive object 200, is retained by the first 325 and second 350 gripper surfaces by bringing both surfaces into contact with the interactive device 200. As depicted in FIG. 2B, if the space between the first 325 and second 350 gripper surfaces is reduced, the elastomer foam displaces, resulting in the interactive object 200 being securely retained - displacement is restricted by being enclosed in the elastomer foam.

Although depicted as fully enclosed, it is not necessary to fully enclose the interactive device 200. The degree of enclosure depends on the physical properties of the elastomer, the dimensions of the interactive device 200 and the degree to which displacement is to be restricted.

For example, FIG. 3A and 3B schematically depict a second embodiment of a provisioning gripper 301, comprising a first 325 gripper surface and a further surface 450. In this embodiment 301, the further surface 450 is substantially less compressible. As depicted, the further surface 450 may be an opening cover 450. As depicted in FIG. 3A, the first 325 gripper surface and further surface 450 are separated by sufficient space to receive an interactive object 200.

The interactive object 200 is received by being disposed on either the first gripper surface 325 or the further surface 450. The interactive object 200, is retained by the surfaces 325, 450 by bringing both surfaces into contact with the interactive device 200. As depicted in FIG. 3B, if the space between the surfaces 325, 450 is reduced, the elastomer foam displaces, resulting in the interactive object 200 being securely retained - displacement is restricted by being enclosed in the elastomer foam.

Although depicted as fully enclosed, it is not necessary to fully enclose the interactive device 200. The degree of enclosure depends on the physical properties of the elastomer, the dimensions of the interactive device 200 and the degree to which displacement is to be restricted.

After the gripper 300, 301 retains the interactive device 200, the provisioning data transmitter 625 transmits provisioning data to the provisioning data receiver 225. The provisioning data is then stored in the provisioning data storage 250 of the interactive device 200.

Preferably, the gripper 300, 301 is configured and arranged such that the provisioning data transmitter 625 is proximate the provisioning data receiver 225. More preferably, the separation distance should be 4 cm or less, more preferably 2 cm or less.

Conventional provisioning systems, such as those depicted and described in FIG. 3A of US patent application US 2007/0249628 and the corresponding part of the description, may encounter problems with incorrect provisions. In particular, usages requiring a high degree of security may operate incorrectly, or be completely inoperative, if a few bits (or even one bit) are corrupted. A conventional solution to this problem is to restrict provisioning to a supplier or manufacturer of the interactive device 200, but this is very inconvenient for users as it may be difficult to quickly obtain provisioned devices 200. In addition, re-provisioning of devices 200 is particularly inconvenient.

One of the insights upon which the invention is based is that a significant cause of data transfer errors is displacement of the interactive device 200. By significantly restricting displacement, the risk and frequency of data errors may be reduced. In this context, a convenient reference point to determine whether displacement has occurred is to measure the distance between the provisioning data transmitter 625 and the provisioning data receiver 225 of the interactive device 200.

A further insight is that this restriction of displacement is achieved using a compressible elastomer foam. Such materials are widely available, allowing a suitable gripper 300, 301 to be provided at relatively lower cost.

A further advantage is that an increased variety of devices 200 and form factors of such devices 200 may be accommodated.

For example, a silicone foam rubber may be used such as Saint-Gobain ^{®} NORSEAL F-20 (www.saint-gobain.com) in one or more gripper surface 325, 350.

It is a medium density closed-cell silicone foam rubber product, designed to deliver environmentally stable, flame-retardant performance for gasketing, insulation and dampening applications. It offers a very high degree of compression set resistance and is often used in aircraft, aerospace, mass transit, military and electronic applications which have very stringent smoke, flame and toxicity requirements.

F-20 offers a high degree of resistance to environmental conditions, making it very suitable for both indoor and outdoor sealing and gasketing applications. The closed-cell foam meets the SAE AMS 3195H (2019) standard for silicone rubber sponge, closed cell, medium.

Typical properties include:

| **Property** | **Unit of Measure** | **Value** | **Test Method** |
|---|---|---|---|
| **Physical** | | | |
| Tensile Strength | psi (kPa) | 30 (207) | ASTM D412 |
| Elongation at Break | % | 60 | ASTM D412 |
| Density | Ib.ft³ (kg/m³) | 20 (320) | ASTM D3574 |
| Compression Deflection | psi (kPa) | 10 (70) | ASTM D1056 |
| Compression Set (50% for 22 hrs. at 212°F) | % | <5 | ASTM D1056 "D" |
| Surface Description | - | Smooth both sides | - |

| **Environmental** | | | |
|---|---|---|---|
| Stain Resistance | - | Pass | ASTM D925 - 06e2, Method A |
| Ozone Effect Rating | - | No cracking | ASTM D1171-99 (2007), Method A |
| UV Resistance | Visual | No degradation | SAE J1960 |
| Water Absorption | % | <1 | ASTM D471 / D1056 |
| Temperature Range | F° (°C) | -60 to + 400 (-51 to +204) | - |
| FDA Extractables | - | Pass | 21 CFR 177.2600 (food contact) |
| Gasket and Seals for Electronic Enclosures | - | Pass | UL 50E |

| **Electrical and Thermal** | | | |
|---|---|---|---|
| Dielectric Strength | volts/mil (VPM) | 80 | ASTM D149 |
| Dielectric Constant | - | 3.5 | ASTM 150 |
| Dissipative Factor | - | 0.03 | ASTM 150 |
| Dry Arc Resistance | Seconds | 127 | ASTM D495 |
| Volume Resistivity | ohms-cm | 3.39 × 10¹⁴ | ASTM 257 |
| Thermal Conductivity | W/m°K | 0.074 | ASTM C518 |
| Thermal Insulation (R-value) | ft.² • h • F°/Btu • in | 1.94 | ASTM C518 |
| Low Temperature Embrittlement | F° (°C) | -148 (-100) | DMA |

In general, a cellular or foam elastomer is desired as that allows the volume of the gripping surface 325, 350 to be changed as the interactive device 200 is enclosed. However, a foam complying with the SAE AMS 3195H (2019) standard is preferred.

The time for receiving provisioning data 225 typically depends on the complexity of the data being transmitted. Preferably it is kept as low as possible to further reduce the risk of data distortion during the receipt of data. Preferably less than 60 seconds, more preferably less than 40 seconds, yet more preferably less than 20 seconds. It may also be advantageous to provide a plurality of shorter transmissions - for example, three transmissions of 20 seconds instead of a single transmission of 60 seconds.

Preferably, in the provisioning system 100, the provisioning data transmitter 625 and the provisioning data receiver 225 are configured and arranged to send and/or receive one or more signals according to an ISO 14443 standard. This is intended to be used over a relatively short range (less than 10cm) at a frequency of approximately 13.56 MHz.

Data transfer from the provisioning data transmitter 625 to the provisioning data receiver 225 is required for the invention. It may also be advantageous to configure and arrange the provisioning data transmitter 625 and the provisioning data receiver 225 of the interactive device 200 to provide one or more bits as data transfer from the provisioning data receiver 225 to the provisioning data transmitter 625 - this allows the devices 200 to be interrogated, and to optionally modify one or more bits of the provisioning data.

The provisioning data may comprise one or more data structures such as: an authentication; an identification; an authorization; a validation request; a data access request; a data usage request; a data storage request; a token, a payment token; or any combination thereof.

The system 100 depicted in Fig. 4 may further comprise:
- optionally, an energy supply 480, configured and arranged to provide energy to the interactive device 20) during receipt of provisioning data. This may be required when interactive devices 200 are provisioned which are unpowered - in other words, they have no significant energy source or energy storage. For example, an inductive power supply 480 may be used. The provisioning data transmitter 625 may be further configured and arranged to also provide energy.
- optionally, a provisioning data controller 600, configured and arranged to receive provisioning instructions, and to execute the instructions, and to transmit corresponding provisioning data with the provisioning data transmitter 625. For many uses of the invention, provisioning may be performed relatively independently by a user. However, in some uses, it may be advantageous to provide different provisioning data to different interactive devices. For example, in some security-sensitive uses, the provisioning may be dependent on an identification of the particular interactive device, such as a serial number. Such an identification may be read, for example, from the interactive device by interrogating it, it may be input by a user directly into the provisioning data controller 600. Additionally or alternatively, a software menu may be provided to allow the user to select the required provisioning instructions. This may increase the number of different types of interactive devices 200 which can be provisioned.

The system 100 depicted in Fig. 4 may further comprise:
- optionally, a data control device 500, configured and arranged to provide provisioning data instructions to the optional provisioning data controller 600. The data control device 500 may be provided at a remote server, with the provisioning data controller being provided at a local server.

Alternatively, the data control device 500 may be provided locally - comprised in a local server, a mobile communications device, a mobile phone, a portable computer, a laptop, or a tablet computer.

Optionally, the provisioning system 100 may further comprises a data control receiver 550, configured and arranged to receive provisioning instructions and to relay them to the provisioning data controller 600. The data control device 500 may comprise a data control transmitter 525, configured and arranged to transmit provisioning instructions to the data control receiver 550. Examples of suitable wireless communication protocols include NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof.

By using a local data control device, the degree of independence may be further increased. In addition, the provisioning system 100 may be used in combination with different data control devices 500 - for example, if an interactive device is being provisioned for a particular consumer, a data device 500 belonging to the consumer may be used.

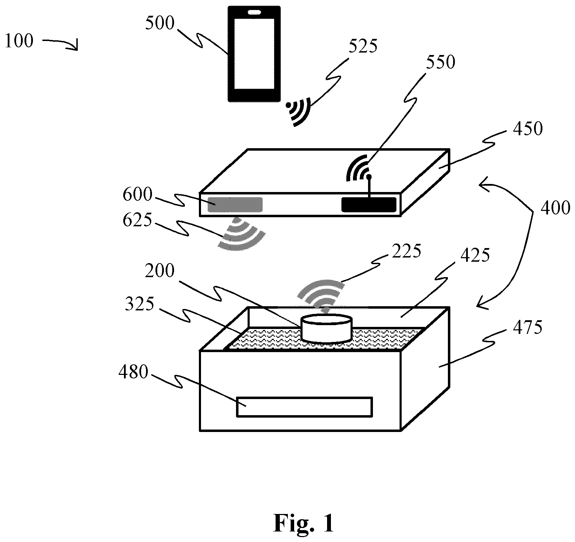

FIG. 1 depicts a schematic perspective view of the provisioning system 100 depicted in FIG. 4, with a modified provisioning gripper 325, 450. The provisioning gripper depicted is the provisioning gripper 301, depicted in FIG. 3A and 3B, comprising a first 325 gripper surface and a further surface 450.

FIG. 1 depicts a provisioning receptacle 400, which comprises:
- a provisioning gripper 301, configured and arranged to receive and retain the interactive device 200 with one provisioning gripper surfaces 325 and a further surface 450, which may be, for example, an opening cover 450. Alternatively, the opening cover 450 may comprise a second provisioning gripping surface 350, in which case the provisioning receptacle 400 would comprise the alternative provisioning gripper 300, depicted in FIG. 2A and 2B.
- the provisioning data transmitter 625, configured and arranged to transmit provisioning data to the provisioning data receiver 225 when the interactive device 200 is retained. Although depicted a being disposed in the optional opening cover 450 (see below), the provisioning data transmitter may be comprised in the receptacle base 475 at any convenient position;
- a receptacle base 475;
- an access opening 425, configured and arranged to allow that the interactive device to be received by the provisioning receptacle 400. As depicted, the access opening 425 is the top face of the provisioning receptacle 400. However, it may be reduced to have substantially the same extent (or slightly, but significantly, larger) as the largest interactive device 200 to be provisioned. By providing a suitably dimensioned opening which is as small as possible, disturbance of the provisioning transmission and reception by external influences may be further reduced.
- optionally, an opening cover 450. As depicted, it is dimensioned to completely close off the access opening 425 during provisioning data reception. Preferably it also remains closed during storage. This may further reduce the degree of disturbance due to external influences. Although a full opening cover 450 is optional, a portion is required comprising the second gripper surface 350 or the further surface 450.
- optionally, a provisioning data controller 600 as described above;
- optionally, an energy supply 480 as described above;
- optionally, a data control receiver 550, as described above.

It may be advantageous to provide two or more provisioning data transmitters 625 at different dispositions within the provisioning receptacle 400, either in the base 475 and/or the optional opening cover 450.

Reliability of data transfer may be increased by allowing the user and/or the provisioning data controller 600 and/or the data control device 500 to select the most appropriate transmitter 625 for the size and form factor of the interactive device 200, or operate two or more transmitters 625 in parallel.

### REFERENCE NUMBERS USED IN THE DRAWINGS

- 100: Provisioning system
- 200: Interactive device
- 225: Provisioning data receiver
- 250: Provisioning data storage
- 300: Provisioning gripper
- 301: Further embodiment of a provisioning gripper
- 325: First provisioning gripper surface
- 350: Second provisioning gripper surface
- 400: Provisioning receptacle
- 425: Access opening
- 450: Opening cover
- 475: Receptacle base
- 480: Provisioning energy supply
- 500: Data control device
- 525: Data control transmitter
- 550: Data control receiver
- 600: Provisioning data controller
- 625: Provisioning data transmitter

## Claims

1. A provisioning receptacle (400) for provisioning an interactive device (200), the interactive device (200) comprising provisioning data storage (250) and a provisioning data receiver (225), the receptacle (400) comprising:
- a provisioning gripper (300, 301), configured and arranged to receive and retain the interactive device (200) with a first provisioning gripper surface (325) and a second provisioning gripper surface (350, 450);
- a provisioning data transmitter (625), configured and arranged to transmit provisioning data to the provisioning data receiver (225) when the interactive device (200) is retained by the provisioning gripper;
wherein:
the retained interactive device (200) is configured and arranged to receive the provisioning data with the provisioning data receiver (225) and to store the provisioning data in the provisioning data storage (250);
wherein the provisioning data transmitter (625) and the provisioning data receiver (225) are configured and arranged to send and/or receive one or more signals wirelessly according to a communication protocol selected from the group consisting of: NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof;
**characterized in that**
- the gripper surfaces (325, 350) comprise a compressible elastomer foam, configured and arranged to significantly restrict displacement of the provisioning data receiver (225) portion of the interactive device (200) relative to the provisioning data transmitter (625) by conforming to an outer surface of the interactive device (200) when the interactive device (200) is retained and receiving provisioning data; and
the provisioning gripper (300, 301) is configured to retain the interactive device (200) by bringing the first (325) and second (350, 450) gripper surfaces into contact with the interactive device (200) such that a space between the first (325) and second (350, 450) gripper surfaces is reduced and the elastomer foam displaces.

2. A provisioning receptacle according to claim 1, wherein:
the distance between the provisioning data transmitter (625) and the provisioning data receiver (225) is 4 cm or less, preferably 2cm or less.

3. A provisioning receptacle according to claim 1 or claim 2, wherein:
the maximum displacement of the provisioning data receiver (225) relative to the provisioning data transmitter (625) during receipt of provisioning data is 1mm or less, preferably 0.5 mm or less.

4. The provisioning receptacle according to any preceding claim, wherein the provisioning data comprises one or more data structures representing one or more values selected from the group comprising:
- an authentication; an identification; an authorization; a validation request; a data access request; a data usage request; a data storage request; a token, a payment token; or any combination thereof.

5. The provisioning receptacle according to any preceding claim, wherein the provisioning data transmitter (625) and the provisioning data receiver (225) are configured and arranged to send and/or receive one or more signals according to an ISO 14443 standard.

6. The provisioning receptacle according to any preceding claim, wherein the interactive device (200) is comprised in an object selected from the group comprising:
- a ring, a bracelet, a wristband, a key chain, a fob, a tag, a necklace, a lanyard, a pin, a badge, a brooch, jewelry, a wearable, a watch, a wrist watch, sunglasses, glasses, a textile, an item of clothing, a hat, a card, an identification card, a payment card, a token, a chip, a disc, or any combination thereof.

7. The provisioning receptacle according to any preceding claim, wherein the provisioning receptacle (400) further comprises:
- a further provisioning data transmitter (625), configured and arranged to transmit provisioning data to the provisioning data receiver (225) when the interactive device (200) is retained.

8. The provisioning receptacle according to any preceding claim, wherein the compressible elastomer foam is selected from the group comprising:
- silicone foam rubber, polyurethane foam, EVA foam, or any combination thereof.

9. The provisioning receptacle according to any preceding claim, wherein, the provisioning receptacle (400) further comprises:
- an access opening (425), configured and arranged to receive the interactive device (200).

10. The provisioning receptacle according to claim 9, wherein, the provisioning receptacle (400) further comprises:
- an opening cover (450), configured and arranged to at least partially cover the access opening (425).

11. The provisioning receptacle according to any preceding claim, wherein the interactive device is unpowered, and the provisioning receptacle (400) further comprises an energy supply (480), configured and arranged to provide energy to the interactive device (200) during receipt of provisioning data.

12. The provisioning receptacle according to any preceding claim, wherein, the provisioning receptacle (400) further comprises:
- a provisioning data controller (600), configured and arranged to receive provisioning instructions, and to execute the instructions, and to transmit corresponding provisioning data with the provisioning data transmitter (625).

13. A provisioning system (100) comprising:
- a provisioning receptacle according to claim 12, the provisioning receptacle (400) further comprising a data control receiver (550), configured and arranged to receive provisioning instructions and to relay them to the provisioning data controller (600); and
- a data control device (500) comprising a data control transmitter (525), configured and arranged to transmit provisioning instructions to the data control receiver (550).

14. The provisioning system of claim 13, wherein the data control transmitter (525) and the data control receiver (550) are configured and arranged to send and/or receive one or more signals wirelessly according to a communication protocol selected from the group consisting of:
NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof.

## Patentansprüche

1. Ein Bereitstellungsbehälter (400) zum Bereitstellen einer interaktiven Vorrichtung (200), wobei die interaktive Vorrichtung (200) einen Bereitstellungsdatenspeicher (250) und einen Bereitstellungsdatenempfänger (225) beinhaltet,
wobei der Behälter (400) Folgendes beinhaltet:
- einen Bereitstellungsgreifer (300, 301), der konfiguriert und eingerichtet ist, um die interaktive Vorrichtung (200) mit einer ersten Bereitstellungsgreiferoberfläche (325) und einer zweiten Bereitstellungsgreiferoberfläche (350, 450) zu empfangen und zu halten;
- einen Bereitstellungsdatensender (625), der konfiguriert und eingerichtet ist, um Bereitstellungsdaten an den Bereitstellungsdatenempfänger (225) zu senden, wenn die interaktive Vorrichtung (200) von dem Bereitstellungsgreifer gehalten wird;
wobei:
die gehaltene interaktive Vorrichtung (200) konfiguriert und eingerichtet ist, um die Bereitstellungsdaten mit dem Bereitstellungsdatenempfänger (225) zu empfangen und die Bereitstellungsdaten in dem Bereitstellungsdatenspeicher (250) zu speichern;
wobei der Bereitstellungsdatensender (625) und der Bereitstellungsdatenempfänger (225) konfiguriert und eingerichtet sind, um gemäß einem Kommunikationsprotokoll, das aus der Gruppe ausgewählt ist, die aus Folgendem besteht, eines oder mehrere Signale drahtlos zu senden und/oder zu empfangen: NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN oder einer beliebigen Kombination davon;
**dadurch gekennzeichnet, dass**
- die Greiferoberflächen (325, 350) einen zusammendrückbaren Elastomerschaum beinhalten, der konfiguriert und eingerichtet ist, um durch Anpassen an eine Außenoberfläche der interaktiven Vorrichtung (200) die Verschiebung des Bereitstellungsdatenempfänger(225)-Abschnitts der interaktiven Vorrichtung (200) relativ zu dem Bereitstellungsdatensender (625) erheblich zu beschränken, wenn die interaktive Vorrichtung (200) gehalten wird und Bereitstellungsdaten empfängt;
und
der Bereitstellungsgreifer (300, 301) konfiguriert ist, um die interaktive Vorrichtung (200) durch In-Kontakt-Bringen der ersten (325) und zweiten (350, 450) Greiferoberflächen mit der interaktiven Vorrichtung (200) zu halten, sodass ein Raum zwischen der ersten (325) und der zweiten (350, 450) Greiferoberfläche reduziert wird und der Elastomerschaum verschoben wird.

2. Bereitstellungsbehälter gemäß Anspruch 1, wobei:
der Abstand zwischen dem Bereitstellungsdatensender (625) und dem Bereitstellungsdatenempfänger (225) 4 cm oder weniger, vorzugsweise 2 cm oder weniger, beträgt.

3. Bereitstellungsbehälter gemäß Anspruch 1 oder Anspruch 2, wobei:
die maximale Verschiebung des Bereitstellungsdatenempfängers (225) relativ zu dem Bereitstellungsdatensender (625) während des Empfangs von Bereitstellungsdaten 1 mm oder weniger, vorzugsweise 0,5 mm oder weniger, beträgt.

4. Bereitstellungsbehälter gemäß einem der vorhergehenden Ansprüche, wobei die Bereitstellungsdaten eine oder mehrere Datenstrukturen beinhalten, die einen oder mehrere Werte darstellen, die aus der Gruppe ausgewählt sind, die Folgendes beinhaltet:
- eine Authentifizierung; eine Identifizierung; eine Autorisierung; eine Validierungsanfrage; eine Datenzugangsanfrage; eine Datennutzungsanfrage; eine Datenspeicheranfrage; einen Token, einen Zahlungstoken; oder eine beliebige Kombination davon.

5. Bereitstellungsbehälter gemäß einem der vorhergehenden Ansprüche, wobei der Bereitstellungsdatensender (625) und der Bereitstellungsdatenempfänger (225) konfiguriert und eingerichtet sind, um ein oder mehrere Signale gemäß einem ISO-14443-Standard zu senden und/oder zu empfangen.

6. Bereitstellungsbehälter gemäß einem der vorhergehenden Ansprüche, wobei die interaktive Vorrichtung (200) in einem Objekt enthalten ist, das aus der Gruppe ausgewählt ist, die Folgendes beinhaltet:
- einen Ring, einen Armreif, ein Armband, einen Schlüsselanhänger, einen Fob, eine Marke, ein Halsband, eine Tragschlaufe, einen Anstecker, ein Namensschild, eine Brosche, Schmuck, einen tragbaren Gegenstand, eine Uhr, eine Armbanduhr, Sonnenbrillen, Brillen, Textilien, ein Kleidungsstück, einen Hut, eine Karte, eine Identifikationskarte, eine Zahlungskarte, einen Token, einen Chip, eine Disc oder eine beliebige Kombination davon.

7. Bereitstellungsbehälter gemäß einem der vorhergehenden Ansprüche, wobei der Bereitstellungsbehälter (400) ferner Folgendes beinhaltet:
- einen weiteren Bereitstellungsdatensender (625), der konfiguriert und eingerichtet ist, um Bereitstellungsdaten an den Bereitstellungsdatenempfänger (225) zu senden, wenn die interaktive Vorrichtung (200) gehalten wird;

8. Bereitstellungsbehälter gemäß einem der vorhergehenden Ansprüche, wobei der zusammendrückbare Elastomerschaum aus der Gruppe ausgewählt ist, die Folgendes beinhaltet:
- Silikonschaumgummi, Polyurethanschaum, EVA-Schaum oder eine beliebige Kombination davon.

9. Bereitstellungsbehälter gemäß einem der vorhergehenden Ansprüche, wobei der Bereitstellungsbehälter (400) ferner Folgendes beinhaltet:
- eine Zugangsöffnung (425), die konfiguriert und eingerichtet ist, um die interaktive Vorrichtung (200) zu empfangen.

10. Bereitstellungsbehälter gemäß Anspruch 9, wobei der Bereitstellungsbehälter (400) ferner Folgendes beinhaltet:
- eine Öffnungsabdeckung (450), die konfiguriert und eingerichtet ist, um die Zugangsöffnung (425) mindestens teilweise abzudecken.

11. Bereitstellungsbehälter gemäß einem der vorhergehenden Ansprüche, wobei die interaktive Vorrichtung nicht bestromt ist und der Bereitstellungsbehälter (400) ferner eine Energieversorgung (480) beinhaltet, die konfiguriert und eingerichtet ist, um der interaktiven Vorrichtung (200) während des Empfangs von Bereitstellungsdaten Energie bereitzustellen.

12. Bereitstellungsbehälter gemäß einem der vorhergehenden Ansprüche, wobei der Bereitstellungsbehälter (400) ferner Folgendes beinhaltet:
- eine Bereitstellungsdatensteuereinheit (600), die konfiguriert und eingerichtet ist, um Bereitstellungsanweisungen zu empfangen und die Anweisungen auszuführen und entsprechende Bereitstellungsdaten mit dem Bereitstellungsdatensender (625) zu senden.

13. Ein Bereitstellungssystem (100), das Folgendes beinhaltet:
- einen Bereitstellungsbehälter gemäß Anspruch 12, wobei der Bereitstellungsbehälter (400) ferner einen Datensteuerungsempfänger (550) beinhaltet, der konfiguriert und eingerichtet ist, um Bereitstellungsanweisungen zu empfangen und sie an die Bereitstellungsdatensteuereinheit (600) weiterzuleiten; und
- eine Datensteuerungsvorrichtung (500), die einen Datensteuerungssender (525) beinhaltet, der konfiguriert und eingerichtet ist, um Bereitstellungsanweisungen an den Datensteuerungsempfänger (550) zu senden.

14. Bereitstellungssystem gemäß Anspruch 13, wobei der Datensteuerungssender (525) und der Datensteuerungsempfänger (550) konfiguriert und eingerichtet sind, um eines oder mehrere Signale gemäß einem Kommunikationsprotokoll, das aus der Gruppe ausgewählt ist, die aus Folgendem besteht, drahtlos zu senden und/oder zu empfangen:
NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN oder einer beliebigen Kombination davon.

## Revendications

1. Un réceptacle de provisionnement (400) pour le provisionnement d'un dispositif interactif (200), le dispositif interactif (200) comprenant une mémoire de données de provisionnement (250) et un récepteur de données de provisionnement (225),
le réceptacle (400) comprenant :
- une pince de provisionnement (300, 301), configurée et agencée pour recevoir et retenir le dispositif interactif (200) avec une première surface de pince de provisionnement (325) et une deuxième surface de pince de provisionnement (350, 450) ;
- un émetteur de données de provisionnement (625), configuré et agencé pour émettre des données de provisionnement à destination du récepteur de données de provisionnement (225) lorsque le dispositif interactif (200) est retenu par la pince de provisionnement ;
où :
le dispositif interactif (200) retenu est configuré et agencé pour recevoir les données de provisionnement avec le récepteur de données de provisionnement (225) et pour mémoriser les données de provisionnement dans la mémoire de données de provisionnement (250) ;
où l'émetteur de données de provisionnement (625) et le récepteur de données de provisionnement (225) sont configurés et agencés pour envoyer et/ou recevoir un ou plusieurs signaux sans fil selon un protocole de communication sélectionné dans le groupe constitué de : NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, ou toute combinaison de ceux-ci ;
**caractérisé en ce que**
- les surfaces de pince (325, 350) comprennent une mousse élastomère compressible, configurée et agencée pour restreindre de manière significative un déplacement de la portion récepteur de données de provisionnement (225) du dispositif interactif (200) relativement à l'émetteur de données de provisionnement (625) en épousant une surface externe du dispositif interactif (200) lorsque le dispositif interactif (200) est retenu et reçoit des données de provisionnement ;
et
la pince de provisionnement (300, 301) est configurée pour retenir le dispositif interactif (200) en amenant les première (325) et deuxième (350, 450) surfaces de pince au contact du dispositif interactif (200) de telle sorte qu'un espace entre les première (325) et deuxième (350, 450) surfaces de pince est réduit et que la mousse élastomère se déplace.

2. Un réceptacle de provisionnement selon la revendication 1, où :
la distance entre l'émetteur de données de provisionnement (625) et le récepteur de données de provisionnement (225) est de 4 cm ou moins, préférablement de 2 cm ou moins.

3. Un réceptacle de provisionnement selon la revendication 1 ou la revendication 2, où :
le déplacement maximum du récepteur de données de provisionnement (225) relativement à l'émetteur de données de provisionnement (625) pendant une réception de données de provisionnement est de 1 mm ou moins, préférablement de 0,5 mm ou moins.

4. Le réceptacle de provisionnement selon n'importe quelle revendication précédente, où les données de provisionnement comprennent une ou plusieurs structures de données représentant une ou plusieurs valeurs sélectionnées dans le groupe comprenant :
- une authentification ; une identification ; une autorisation ; une demande de validation ; une demande d'accès à des données ; une demande d'utilisation de données ; une demande de mémorisation de données ; un jeton, un jeton de paiement ; ou toute combinaison de ceux-ci.

5. Le réceptacle de provisionnement selon n'importe quelle revendication précédente, où l'émetteur de données de provisionnement (625) et le récepteur de données de provisionnement (225) sont configurés et agencés pour envoyer et/ou recevoir un ou plusieurs signaux selon une norme ISO 14443.

6. Le réceptacle de provisionnement selon n'importe quelle revendication précédente, où le dispositif interactif (200) est compris dans un objet sélectionné dans le groupe comprenant :
- une bague, un bracelet, un accessoire porté au poignet, une chaîne porte-clés, une breloque, un insigne, un collier, un cordon, une épingle, un badge, une broche, un bijou, un article portable, une montre, une montre-bracelet, des lunettes de soleil, des lunettes, un textile, un article vestimentaire, un chapeau, une carte, une carte d'identification, une carte de paiement, un jeton, une puce, un disque, ou toute combinaison de ceux-ci.

7. Le réceptacle de provisionnement selon n'importe quelle revendication précédente, où le réceptacle de provisionnement (400) comprend en sus :
- un émetteur de données de provisionnement (625) supplémentaire, configuré et agencé pour émettre des données de provisionnement à destination du récepteur de données de provisionnement (225) lorsque le dispositif interactif (200) est retenu.

8. Le réceptacle de provisionnement selon n'importe quelle revendication précédente, où la mousse élastomère compressible est sélectionnée dans le groupe comprenant :
- du caoutchouc mousse de silicone, de la mousse de polyuréthane, de la mousse d'AVE, ou toute combinaison de ceux-ci.

9. Le réceptacle de provisionnement selon n'importe quelle revendication précédente, où le réceptacle de provisionnement (400) comprend en sus :
- une ouverture d'accès (425), configurée et agencée pour recevoir le dispositif interactif (200).

10. Le réceptacle de provisionnement selon la revendication 9, où le réceptacle de provisionnement (400) comprend en sus :
- un couvercle d'ouverture (450), configuré et agencé pour couvrir au moins partiellement l'ouverture d'accès (425).

11. Le réceptacle de provisionnement selon n'importe quelle revendication précédente, où le dispositif interactif n'est pas alimenté en courant, et le réceptacle de provisionnement (400) comprend en sus une source d'énergie (480), configurée et agencée pour fournir de l'énergie au dispositif interactif (200) pendant une réception de données de provisionnement.

12. Le réceptacle de provisionnement selon n'importe quelle revendication précédente, où le réceptacle de provisionnement (400) comprend en sus :
- un organe de commande de données de provisionnement (600), configuré et agencé pour recevoir des instructions de provisionnement, et pour exécuter les instructions, et pour émettre des données de provisionnement correspondantes avec l'émetteur de données de provisionnement (625).

13. Un système de provisionnement (100) comprenant :
- un réceptacle de provisionnement selon la revendication 12, le réceptacle de provisionnement (400) comprenant en sus un récepteur de commande de données (550), configuré et agencé pour recevoir des instructions de provisionnement et pour les relayer au dispositif de commande de données de provisionnement (600) ; et
- un dispositif de commande de données (500) comprenant un émetteur de commande de données (525), configuré et agencé pour émettre des instructions de provisionnement à destination du récepteur de commande de données (550).

14. Le système de provisionnement de la revendication 13, où l'émetteur de commande de données (525) et le récepteur de commande de données (550) sont configurés et agencés pour envoyer et/ou recevoir un ou plusieurs signaux sans fil selon un protocole de communication sélectionné dans le groupe constitué de :
NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, ou toute combinaison de ceux-ci.
